# EUROPÄISCHE PATENTSCHRIFT

(11) **EP 0 555 284 B1**
(45) Veröffentlichungstag und Bekanntmachung des Hinweises auf die Patenterteilung: **19.02.1997**
(21) Anmeldenummer: 91918733.6
(22) Anmeldetag: 31.10.1991
(51) Int. Cl.: C08L 25/08

(54) **PLASTISOLZUSAMMENSETZUNG**
PLASTISOL COMPOSITION
COMPOSITION DE PLASTISOL

(30) Priorität: 31.10.1990 DE 4034725
(43) Veröffentlichungstag der Anmeldung: 18.08.1993
(73) Patentinhaber: Henkel Teroson GmbH, 69123 Heidelberg (DE)
(72) Erfinder: RUCH, Klaus, D-6908 Wiesloch (DE); SCHEFFLER, Ingolf, D-6908 Wiesloch (DE)
(74) Vertreter: UEXKÜLL & STOLBERG
(86) Internationale Anmeldenummer: EP9102070
(87) Internationale Veröffentlichungsnummer: WO9207906

(56) Entgegenhaltungen:
- EP-A- 0 261 499
- EP-A- 0 265 371
- DE-A- 2 529 732
- DE-B- 2 454 235

## Beschreibung

Die Erfindung betrifft eine neuartige Plastisolzusammensetzung auf Basis von Styrolcopolymeren, Weichmachern und anorganischen Füllstoffen sowie gegebenenfalls weiteren üblichen Zusätzen.

Unter Plastisolen werden allgemein Dispersionen von organischen Kunststoffen in Weichmachern verstanden, welche beim Erwärmen auf höhere Temperatur gelieren und beim Abkühlen aushärten. Die in der Praxis heute noch gebräuchlichen Plastisole enthalten ganz überwiegend feinpulvriges Polyvinylchlorid (PVC), welches in einem flüssigen Weichmacher dispergiert ist und eine Paste bildet. Derartige Polyvinylchloridplastisole finden für die verschiedensten Zwecke Anwendung. Sie werden u.a. als Dichtungsmassen, z.B. für Nahtabdichtungen bei Metallbehältern oder als Bördelnahtkleber in der Metallindustrie, als Korrosionsschutzüberzüge für Metalle (beispielsweise als Unterbodenschutz für Kraftfahrzeuge), zum Imprägnieren und Beschichten von Substraten aus textilen Materialien (z.B. als Teppichrückseitenbeschichtung), als Kabelisolierungen usw. eingesetzt.

Bei der Herstellung und Anwendung von PVC-Plastisolen treten jedoch eine Reihe von Problemen auf. Schon die Herstellung von PVC selbst ist nicht unproblematisch, weil in den Produktionsstätten die dort Beschäftigten einer gesundheitlichen Gefährdung durch das monomere Vinylchlorid ausgesetzt sind. Reste an monomerem Vinylchlorid im PVC könnten darüber hinaus auch bei der Weiterverarbeitung oder bei den Endverbrauchern gesundheitsgefährdend sein, obwohl die Gehalte im allgemeinen nur noch im ppb-Bereich liegen.

Besonders schwerwiegend ist bei der Anwendung von PVC-Plastisolen, daß das PVC sowohl wärme- als auch lichtempfindlich ist und zur Abspaltung von Chlorwasserstoff neigt. Dies stellt insbesondere dann ein ernstes Problem dar, wenn das Plastisol auf eine höhere Temperatur erhitzt werden muß, da der unter diesen Bedingungen frei gesetzte Chlorwasserstoff korrodierend wirkt und metallische Substrate angreift. Dies gilt insbesondere, wenn zur Verkürzung der Gelierzeit verhältnismäßig hohe Einbrenntemperaturen Anwendung finden oder wenn wie bei der Punktschweißung lokal hohe Temperaturen auftreten.

Das größte Problem tritt bei der Entsorgung von PVC enthaltenden Abfällen auf: Neben Chlorwasserstoff können u.U. Dioxine entstehen, welche bekanntlich hochgiftig sind. In Verbindung mit Stahlschrott können PVC-Reste zu einer Erhöhung des Chloridgehaltes der Stahlschmelze führen, was ebenfalls nachteilig ist.

Es ist deshalb das Ziel der Erfindung, eine polyvinylchloridfreie Plastisolzusammensetzung zu entwickeln, deren Anwendungseigenschaften denen von PVC-Plastisolen entsprechen.

Es sind bereits Plastisole auf Polyurethan- oder Acrylatbasis bekannt geworden. Zwei-Komponenten-Polyurethansysteme unterscheiden sich in der Anwendung grundlegend von üblichen Plastisolen, den Anwendern stehen die für deren Verarbeitung erforderlichen komplizierten Anlagen in der Regel nicht zur Verfügung. Ein-Komponenten-Polyurethansysteme sind nicht ausreichend lagerstabil. Wenn man versucht, diesen Nachteil durch Verkapselung der Isocyanate zu beseitigen, ist dies sehr aufwendig, so daß diese Produkte dann kostenmäßig mit PVC-Plastisolen nicht konkurrieren können. Auch die Abriebfestigkeit ist für viele Anwendungen, z.B. als Unterbodenschutz für Kraftfahrzeuge, nicht ausreichend.

Acrylat-Plastisole, wie sie durch die DE-B-24 54 235 und DE-B-25 29 732 bekanntgeworden sind, erfüllen zwar die eingangs genannten technischen Anforderungen weitgehend, die erforderlichen Acrylatpolymeren sind jedoch ebenfalls weitaus teurer als Polyvinylchlorid, so daß die Anwendung derartiger Acrylatplastisole bislang auf spezielle Anwendungsgebiete, beispielsweise als Punktschweißpasten, beschränkt geblieben ist, bei denen PVC-Plastisole völlig versagen. Plastisole auf Basis von Styrol/Acrylnitril-Mischpolymerisaten gemäß der EP-A-261 499 stellen wegen unzureichender Abriebfestigkeit und Lagerstabilität ebenfalls noch keine befriedigende Lösung dar.

Die EP-A-265 371 beschreibt Plastisole aus einer Dispersion aus carboxylgruppenhaltigen, feinteiligen Polymeren, welche mit mehrfunktionellen basischen Substanzen umgesetzt sind, in Weichmachern. Als Polymere finden Copolymerisate von beliebigen Monomeren mit polymerisierbaren Säuren, z.B. Copolymere von Vinylchlorid, Vinylidenchlorid, Acrylaten, Methacrylaten, Maleinaten, Styrol, Methylstyrol, Vinylestern, Vinylethern, Acrylnitril, Olefinen oder Dienen mit Säuren wie Acrylsäure, Methacrylsäure, Itaconsäure, Crotonsäure, Maleinsäure oder Fumarsäure Verwendung. Diese Copolymeren werden mit basischen Substanzen wie basischen Metallverbindungen mehrwertiger Metalle, mindestens bifunktionellen Aminverbindungen und anderen umgesetzt. In der praktischen Anwendung vermögen diese Plastisole nicht zu befriedigen; die mechanischen Eigenschaften (Elastizität bzw. Bruchdehnung) sind ungenügend. Es besteht ferner eine starke Neigung zur Verfärbung und bei Zusatz von polyfunktionellen Aminen tritt beim Gelieren eine großporige Blasenbildung auf.

Es wurde jetzt gefunden, daß man Plastisolzusammensetzungen mit ausgezeichneten Anwendungseigenschaften, insbesondere guter Lagerstabilität, guter Haftung auf Metallen und hoher Abriebfestigkeit und ausgezeichneten mechanischen Eigenschaften, erhalten kann, wenn man als organische Polymerkomponente durch Emulsionspolymerisation herstellbare Styrolcopolymer-Pulver einsetzt, welche gemäß Anspruch 1 aus
a) Styrol und/oder α-Methylstyrol und/oder p-Methylstyrol und
b) 3 bis 20 Gew. % (bezogen auf das Copolymere) Methacrylsäure und/oder Acrylsäure und/oder Itaconsäure bestehen.

Es hat sich gezeigt, daß bei der Emulsionspolymerisation dieser Styrolcopolymeren Polymerteilchen mit einer sehr einheitlichen durchschnittlichen Primärteilchengröße von etwa 0,3 bis 1,5 µm erhalten werden können, bei denen die polaren Carboxylgruppen im wesentlichen außen angeordnet sind und als lipophobe Reste offenbar für die Stabilität der Dispersionen dieser Teilchen im Weichmacher bei Raumtemperatur verantwortlich sind. Gegebenfalls kann der Polymerisationsprozeß so gelenkt werden, daß eine bimodale Verteilung der Primärteilchengröße erreicht wird. Diese Ausführungsform ist besonders wünschenswert, wenn trotz hohem Polymeranteil in der Plastisolzusammensetzung eine niedrige Viskosität erreicht werden soll. Beim Erwärmen auf höhere Temperaturen zum Gelieren des Plastisols dringt dagegen der Weichmacher in den Styrolkern ein und führt zum Gelieren des Plastisols. Die Verwendung von Kern/Schale-Copolymeren auf Methacrylatbasis ist zwar in den DE-B 25 43 542, DE-B-27 22 752 und DE-B-29 49 954 bereits beschrieben; doch ist es neu und überraschend, daß Copolymere aus Styrol und einer untergeordneten Menge Methacrylsäure bzw. Acrylsäure (nachfolgend kurz als (Methacrylsäure" bezeichnet) derartige Polymerpulver bilden, aus denen besonders vorteilhafte Plastisolzusammensetzungen hergestellt werden können.

Die erfindungsgemäß eingesetzten Copolymeren weisen ein Molekulargewicht in der Größenordnung von 200.000 bis 1.000.000 auf und enthalten neben Styrol, α-Methylstyrol und/oder p-Methylstyrol 3 bis 20 Gew.%, vorzugsweise etwa 5 bis 10 Gew.% (Meth)acrylsäure und/oder Itaconsäure. Mit steigendem Gehalt an (Meth)acrylsäure und/oder Itaconsäure steigt die Lagerstabilität der Plastisole an. Aufgrund der freien Carboxylgruppen zeigen die Plastisole darüber hinaus eine hervorragende Haftung auf Substraten aus Metall (z.B. Stahl oder Zink) oder auf kataphoretischen Elektrotauchlacken. Der Gehalt an (Meth)acrylsäure und/oder Itaconsäure im Copolymeren soll jedoch 20 Gew.% und vorzugsweise etwa 10 Gew.% nicht übersteigen, weil dann die Abriebfestigkeit des Plastigels abnimmt. Bis zu 80 Gew.-% der Comonomer-Komponente b) ((Meth)acrylsäure und/oder Itaconsäure) kann durch Methyl(meth)acrylat, (Meth)acrylamid und/oder Glycidyl(meth)acrylat ersetzt sein.

Zur Erhöhung der Flexibilität und damit der Abriebfestigkeit des aus der erfindungsgemäßen Plastisolzusammensetzung hergestellten Plastigels kann die Styrolkomponente a) des Copolymeren bis zu 45, insbesondere bis zu 20 Gew.% (bezogen auf das Styrol) an Butadien, Isopren, Piperylen und/oder eines anderen kautschukbildenden Comonomeren enthalten.

Wie oben bereits gesagt, liegt die mittlere Primärteilchengröße des Copolymerpulvers zwischen 0,3 und 1,5 µm, was durch entsprechende Steuerung der Emulsionspolymerisation erreicht werden kann. Die aus den Primärteilchen gebildeten Agglomerate weisen eine durchschnittliche Sekundärteilchengröße von weniger als 100 µm, vorzugsweise von etwa 20 bis 60 µm auf.

Erfindungsgemäß ist es darüber hinaus möglich, Eigenschaften des Plastigels, insbesondere die Abriebfestigkeit dadurch weiter zu verbessern, daß man dem Plastisol eine bei der Geliertemperatur mit den Carboxylgruppen des Copolymeren unter Vernetzung reagierende Verbindung in einer Menge bis zu 40 Gew.-% zusetzt. Für eine Reaktion mit den vorhandenen Carboxylgruppen kommen insbesondere langkettige Epoxyverbindungen, epoxidierte Polybutadiene oder auch epoxydierte natürliche Öle wie epoxydiertes Sojabohnenöl in Betracht. Geignet sind ferner auch di- oder polyhydroxyfunktionelle Polyethylen- und/oder Polypropylenglykole. Weiterhin können flüssige hydroxyfunktionelle Polybutadiene oder mercaptan-terminierte Flüssigpolymere anstelle von oder in Kombination mit den oben genannten Polypropylenglykolen verwendet werden. Die Bildung von Esterbindungen zwischen diesen Verbindungen und den Carboxylgruppen des Styrolcopolymeren findet im allgemeinen bereits beim Erwärmen des Plastisols auf die Geliertemperatur statt. Gegebenenfalls können jedoch geeignete Katalysatoren für die Vernetzungsreaktion in einer Menge von etwa 0.01 bis 2.0 Gew.-%, z.B. Imidazol oder substituierte Imidazole wie N-Alkylimidazole, z.B. N-Methylimidazol, tert. Amine, Tetramethylendiamin oder Harnstoffderivate zugesetzt werden. Für die Esterbildung mit Glykolen sind auch Alkylbenzolsulfonsäuren und Titanate als Katalysatoren geeignet.

Falls das Styrolcopolymer geringe Mengen an Glycidyl(meth)acrylat als Comonomer enthält, kann man dem Plastisol als mit den Epoxidgruppen vernetzend wirkende Verbindungen Di- oder Polyamine, Di- oder Polycarbonsäuren oder Mercaptoverbindungen zufügen.

Eine weitere Möglichkeit zur Verbesserung der mechanischen Eigenschaften der Plastigele besteht darin, daß man in dem Weichmacher Polyurethanbildner in Form von Isocyanatprepolymeren und aliphatischen oder cycloaliphatischen Diaminen löst. Die Isocyanatpräpolymeren enthalten dabei vorzugsweise blockierte Isocyanatgruppen, z.B. durch Caprolactam blockierte Isocyanatgruppen, oder sie liegen in Form von festen, mikroverkapselten Isocyanatpräpolymeren als Dispersion in der flüssigen Phase vor. Diese Isocyanatpräpolymeren können in einer Menge bis zu 30 Gew.-% der Gesamtformulierung vorliegen, die (cyclo)aliphatischen Diamine können bei niedrigmolekularen Aminen (bis zu einem Molekulargewicht von etwa 500) bis zu 5 Gew.-%, bei höhermolekularen Diaminen bis zu 30 Gew.-% der Gesamtformulierung ausmachen. Beim Erhitzen auf die Geliertemperatur tritt eine Polyurethanbildung ein, wobei mit dem dispergiert vorliegenden Styrolcopolymeren möglicherweise eine IPN-Struktur (Interpenetrating Polymer Network) gebildet wird.

Durch die reaktiven Zusätze werden folgende Eigenschaftsverbesserungen erreicht:
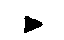 Durch die Vernetzung wird die Temperaturstabilität und die Hochtemperaturformstabilität entscheidend verbessert,
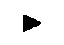 die weichen Segmente der Polyether bewirken eine Flexibilisierung und höhere Dehnfähigkeit sowie eine deutliche Verbesserung der Abriebfestigkeit der erfindungsgemäßen Plastisole nach dem Gelieren,
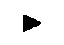 durch eine Variation der reaktiven Zusätze lassen sich die Eigenschaften in weiten Grenzen verändern, ohne daß dazu viele unterschiedliche Styrolcopolymere separat hergestellt werden müssen,
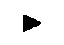 die Kälteflexibilität wird entscheidend verbessert,
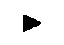 die Verträglichkeit mit den preisgünstigen handelsüblichen Phthalatweichmachern, z.B. Dioctylphthalat, Diisononylphthalat, Diheptylphthalat und ähnlichen wird wesentlich verbessert.

Auf 100 Gewichtsteile des Styrolcopolymeren enthält die Plastisolzusammensetzung etwa 30 bis 1000 Gewichtsteile Weichmacher und bis zu 700 Teile inerte Füllstoffe. Als Weichmacher sind an sich die herkömmlichen organischen Weichmacher geeignet (vergl. hierzu Paul E. Bruins, Plasticizer Technology [Weinhold Publishing Corporation, New York], Bd. 1, S. 228 bis 232). Bevorzugt werden Alkylphthalate wie Dibutylphthalat, Dioctylphthalat, Butylbenzylphthalat, Dibenzylphthalat und ganz besonders Diisononylphthalat. Geeignet sind jedoch auch die bekannten Weichmacher aus der Gruppe der organischen Phosphate, Adipate und Sebacate oder auch Benzylbenzoat oder Diphenylether.

Die Herstellung der erfindungsgemäß eingesetzten Styrolcopolymeren erfolgt durch Polymerisation in Emulsion vorzugsweise nach dem sogenannten Keimlatex-Verfahren. Dabei wird zunächst in wässriger Phase unter Verwendung geeigneter Emulgatoren ein Keimlatex erzeugt, welcher vorgelegt wird, worauf die Monomeren und ggf. weiterer Emulgator zudosiert werden. Auf diese Weise ist es möglich, die gewünschte durchschnittliche Teilchengröße relativ genau einzustellen. Ferner erreicht man, daß sich die hydrophilen Reste, insbesondere die Carboxylgruppen, nach außen zur wässrigen Phase hin orientieren, so daß die gewünschte Kern/Schale-Struktur erhalten wird. Es ist jedoch ggf. auch möglich, zunächst überwiegend die Styrolkomponente zu polymerisieren und das Comonomere erst im späteren Stadium der Polymerisation zuzugeben; diese Arbeitsweise empfiehlt sich insbesondere dann, wenn die Comonomeren weniger polare Reste aufweisen, z.B. Estergruppen.

Anschließend werden die so erhaltenen Dispersionen in ein trockenes Pulver überführt, wofür die Sprühtrocknung besonders geeignet ist, wenn dabei die Temperaturbedingungen so gewählt werden, daß die Primärteilchen nicht zusammensintern, sondern lediglich lockere Agglomerate bilden.

Die erfindungsgemäßen Plastisole eignen sich im Kraftfahrzeugbau besonders als Unterbodenschutzmittel sowie ferner als Klebstoffe für die Haubenunterfütterung, als Massen zum Schwellerschutz und als Punktschweißpasten. In der Verpackungsmittelindustrie können sie als Dichtungsmassen für Behälterverschlüsse wie Kronenkorken sowie als Nahtabdichtungsmittel und Bördelnahtklebstoffe für Blechdosen mit Vorteil Anwendung finden.

Zur näheren Erläuterung der Erfindung sollen die nachfolgenden Beispiele dienen:

### Beispiel 1 (Herstellung des Copolymeren)

Es wurden die folgenden Komponenten eingesetzt:

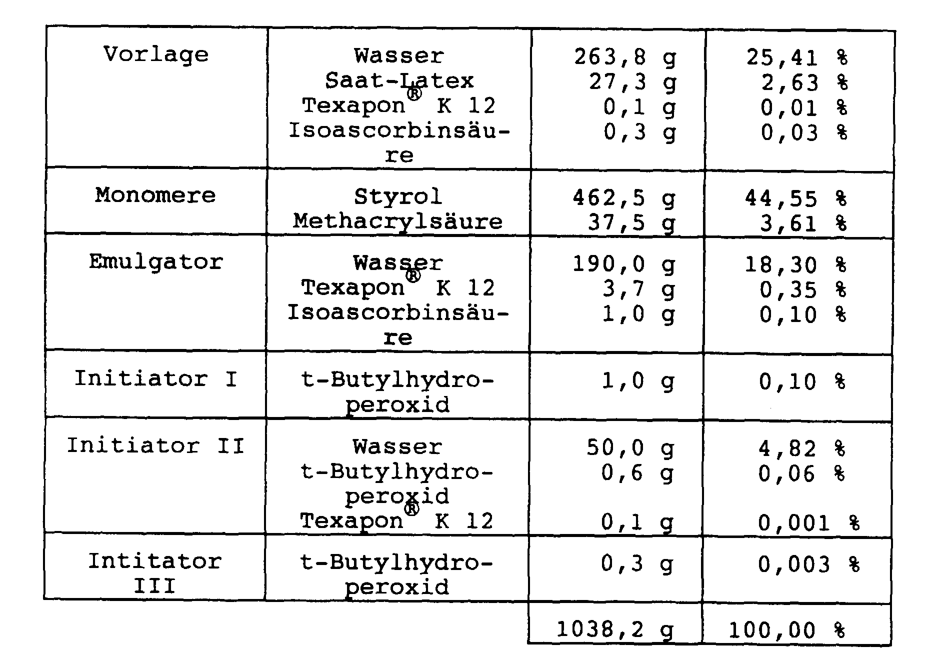

In einem Reaktionsgefäß mit Ankerrührer, Innenthermometer, Stickstoffzufuhr, Vakuumanschluß, Rückflußkühler und drei geschlossenen Tropftrichtern in einem heizbaren Wasserbad wurden der Saat-Latex in Wasser mit dem Emulgator (Natriumlaurylsulfat, Texapon® K12 der Fa. Henkel) und Isoascorbinsäure vorgelegt. Dabei wurde entmineralisiertes und von Luftsauerstoff befreites Wasser verwendet. Die gesamte Apparatur wurde gründlich mit Stickstoff gespült und während der Polymerisation wurde ein langsamer Stickstoffstrom durch die Apparatur geleitet.

Nach Aufwärmen der Vorlage auf 75°C wurde 1 g t-Butylhydroperoxid als Initiator I zugesetzt. Anschließend begann der gleichmäßige Zulauf von Monomeren, Emulgator und Initiator II über einen Zeitraum von 4 Stunden. Während der Zugabe wird die Temperatur so geregelt, daß sie 85 bis 90°C nicht überschreitet. Die Rührgeschwindigkeit darf nicht zu hoch sein, die Monomeren müssen jedoch ausreichend in der wässrigen Phase dispergiert werden.

Nach Zulauf der drei Komponenten wird eine weitere Stunde lang bei 75°C gerührt. Anschließend wird der Initiator III zugesetzt. Nach weiterem Rühren während 2 Stunden bei 75°C wird die Dispersion gekühlt und unter Siebung abgelassen, wobei nur eine geringfügige Menge an Koagulat auf dem Sieb zurückbleibt.

Zur Gewinnung eines für die Plastisolherstellung geeigneten Polymerpulvers wird die Dispersion sprühgetrocknet, wobei die jeweils gewählten Parameter von der eingesetzten Anlage abhängig sind. Folgende Bedingungen wurden angewendet:
Lufteinlaßtemperatur: 180 - 200°C
Luftauslaßtemperatur: 80 - 85°C
Agglomerat-Teilchengröße des getrockneten Pulvers: 35 ± 5µm.

### Beispiel 2

Herstellung eines Plastisols.

Ein Plastisol wurde aus den folgenden Komponenten hergestellt:

| | |
|---|---|
| Polymerpulver gemäß Beispiel 1: | 100 Teile |
| Diisononylphthalat (Weichmacher): | 100 Teile |
| Bariumsulfat: | 100 Teile |
| Ruß: | 3 Teile |

Es wurde ein Plastisol erhalten, welches sich als Unterbodenschutz für Kraftfahrzeuge ausgezeichnet eignete.

### Beispiel 3

Aus den folgenden Komponenten wurde ein Plastisol hergestellt:

| | |
|---|---|
| Polymerpulver gemäß Beispiel 1: | 100 Teile |
| Diisononylphthalat (Weichmacher): | 152 Teile |
| Calciumcarbonat: | 225 Teile |
| Titandioxid: | 3 Teile |
| Haftvermittler: | 2 Teile |
| Azodicarbonamid (Blähmittel): | 3 Teile |
| Hexan (Viskositätserniedriger): | 15 Teile. |

Es wurde ein Plastisol erhalten, welches als Dichtungsmasse für Behälterverschlüsse (Kronenkorken) hervorragend geeignet war. Die folgenden Beispiele 4, 5 und 6 beschreiben Plastisole ohne Füllstoff, die zur Bestimmung des Abriebs hergestellt wurden.

### Beispiel 4

Aus den folgenden Komponenten wurde ein Plastisol hergestellt:

| | |
|---|---|
| Polymerpulver gemäß Beispiel 1: | 100 Teile |
| Diisononylphthalat: | 100 Teile |

Nach Einbrennen einer 1000 µm dicken Schicht bei 150°C/30 Min. wurde ein Abrieb von 44 Sek. gemessen.

### Beispiel 5

Aus den folgenden Komponenten wurde ein Plastisol hergestellt:

| | |
|---|---|
| Polymerpulver gemäß Beispiel 1: | 100 Teile |
| | |
| Diisononylphthalat: | 100 Teile |
| Monofunktionelles Epoxid: | 2 Teile |

Nach Einbrennen wie in Beispiel 4 wurde bei einer Schichtdicke von 850 µm ein Abrieb vin 1 Min. gefunden.

### Beispiel 6

| | |
|---|---|
| Polymerpulver gemäß Beispiel 1: | 100 Teile |
| Diisononylphthalat: | 100 Teile |
| Trifunkt. Polypropylenglykol (MW 3000): | 10 Teile |
| Methylimidazol: | 0.3 Teile |

Nach Einbrennen wie in Beispiel 4 wurde bei einer Schichtdicke von 750 µm ein Abrieb von 4 Min. 58 Sek. gefunden.

### Beispiel 7

Aus den folgenden Komponenten wurde ein Plastisol hergestellt:

| | |
|---|---|
| Polymerpulver gemäß Beispiel 1: | 200 Teile |
| Diisononylphthalat (Weichmacher): | 200 Teile |
| Verkapseltes Polyurethanpräpolymer | 100 Teile |
| Cycloaliphatisches Diamin | 10 Teile |
| Calciumcarbonat (gemahlene Kreide): | 200 Teile |
| Calciumoxid: | 40 Teile |

### Beispiel 8 (Vergleichsbeispiel)

Aus den folgenden Komponenten wurden in Anlehnung an EP-A-265 371 drei Plastisolformulierungen hergestellt. Anschließend wurden die Plastisole in einer etwa 2 mm starken Schicht auf ein kataphoretisch lackiertes Stahlblech aufgerakelt und 30 min bei 150°C im Ofen gebrannt. Die Zusammensetzungen der drei Plastisole sowie deren Eigenschaften sind in der folgenden Tabelle angegeben.

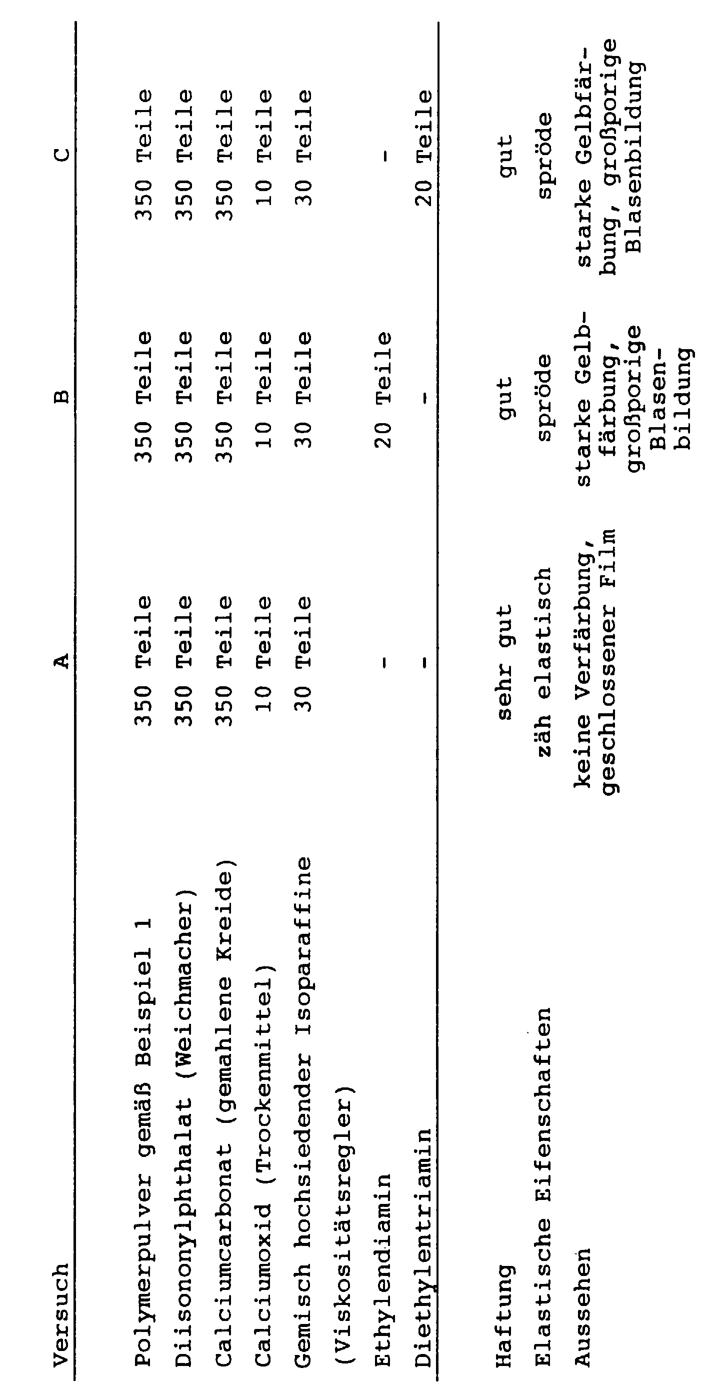

Vergleichsbeispiel A ist ein erfindungsgemäßes Beispiel, während Vergleichsbeispiele B und C ein polyfunktionelles Amin gemäß der EP-A-265 371 enthalten. Man sieht deutlich, daß man aus dem erfindungsgemäßem Plastisol einen sehr gut als Unterbodenschutz geeigneten Film erhält, während die Filme der Vergleichsbeispiele B und C wegen ihrer starken Versprödung, starken Gelbfäbrung sowie ganz besonders wegen der großporigen Blasenbildung als Unterbodenschutz ungeeignet sind.

### Beispiel 9 (Vergleichsbeispiel)

Aus den folgenden Komponenten wurden Plastisolformulierungen hergestellt. Anschließend wurden die Plastisole in eine Form gegossen und 30 min bei 150°C eingebrannt, so daß 2 mm starke Filme erhalten wurden, welche in Form von S 1 Schulterstäben dem Zugversuch gemäß DIN 53504 unterworfen wurden.

| Versuch | D | E |
|---|---|---|
| Polymerpulver gemäß Beispiel 1 | 300 Teile | 300 Teile |
| Diisononylphthalat (Weichmacher) | 390 Teile | 390 Teile |
| Calciumcarbonat (gemahlene Kreide) | 300 Teile | 290 Teile |
| Calciumoxid (Trockenmittel) | 10 Teile | 10 Teile |
| Zinkoxid | - | 10 Teile |
| Zugfestigkeit (N/cm²) | 152 | 154 |
| Dehnung (%) | 217 | 16 |
| Shore A Härte | 76 | 78 |

Die Zusammensetzung des Versuchs D ist wiederum erfindungsgemäß, während die Zusammensetzung des Versuchs E sich von der des Versuches D durch den Zusatz von Zinkoxid (gemäß der EP-A-265 371) unterscheidet. Man sieht deutlich, daß der Zusatz von Zinkoxid die Bruchdehnung des Plastisols um Größenordnungen erniedrigt, so daß ein derartiges Plastisol für Unterbodenschutzanwendungen völlig unbrauchbar ist.

### Beispiel 10 (Vergleichsbeispiel)

Nach der Verfahrensweise des Beispiels 1 wurde in Anlehnung an EP-A-265 371 ein Polymerpulver mit folgender Monomer-Zusammensetzung synthetisiert und sprühgetrocknet:

| | |
|---|---|
| Styrol | 277,5 g |
| Acrylnitril | 185,0 g |
| Methacrylsäure | 37,5 g |

Mit diesem Polymerpulver wurde eine Plastisolformulierung gemäß Versuch A des Beispiels 8 hergestellt und 30 min bei 150°C im Ofen eingebrannt. Es resultierte ein sehr sprödes und brüchiges Plastisol, aus dem nach kurzer Zeit der Weichmacher ausschwitzte. Ein derartiges Plastisol ist für Unterbodenschutzapplikationen völlig ungeeignet.

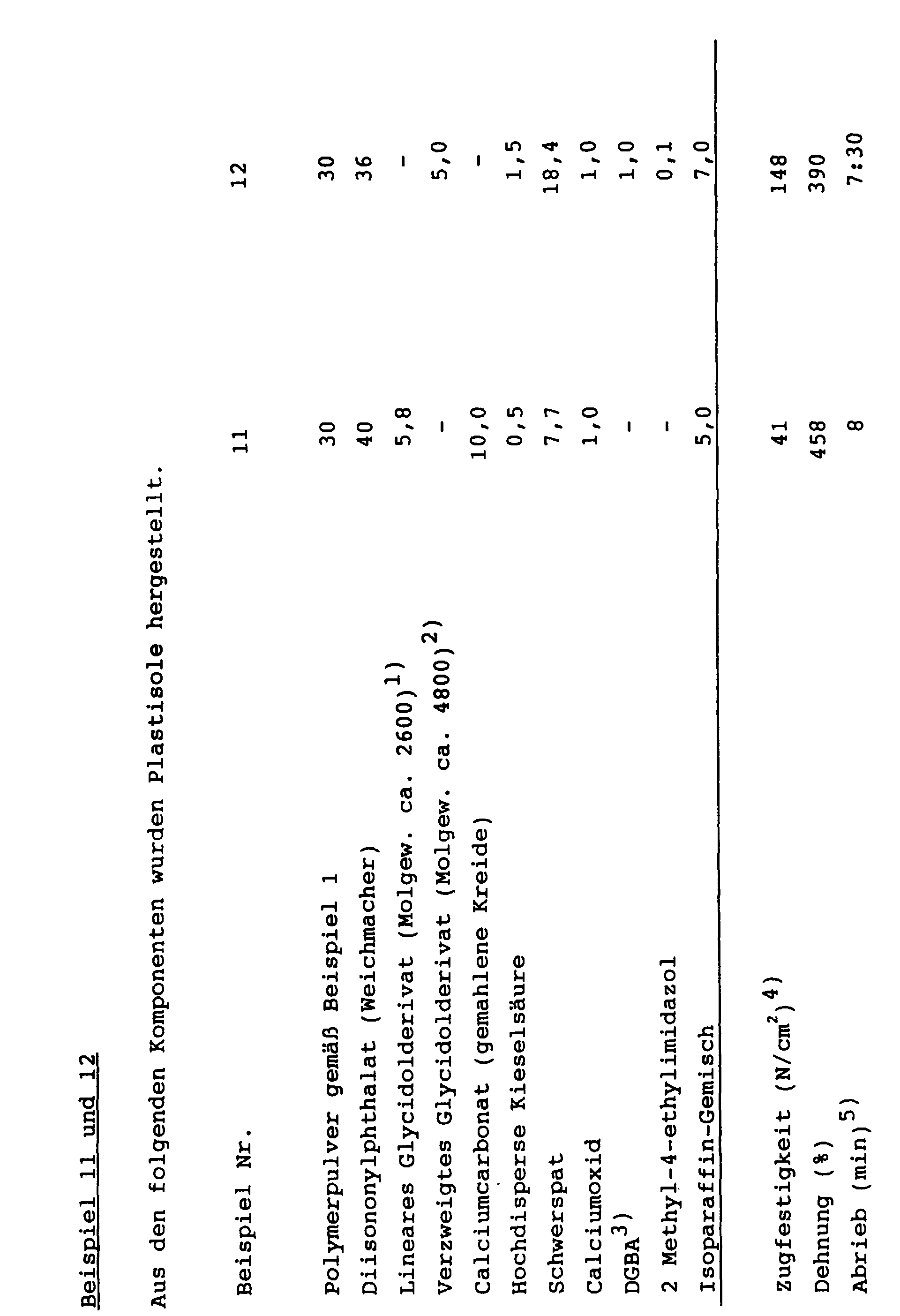

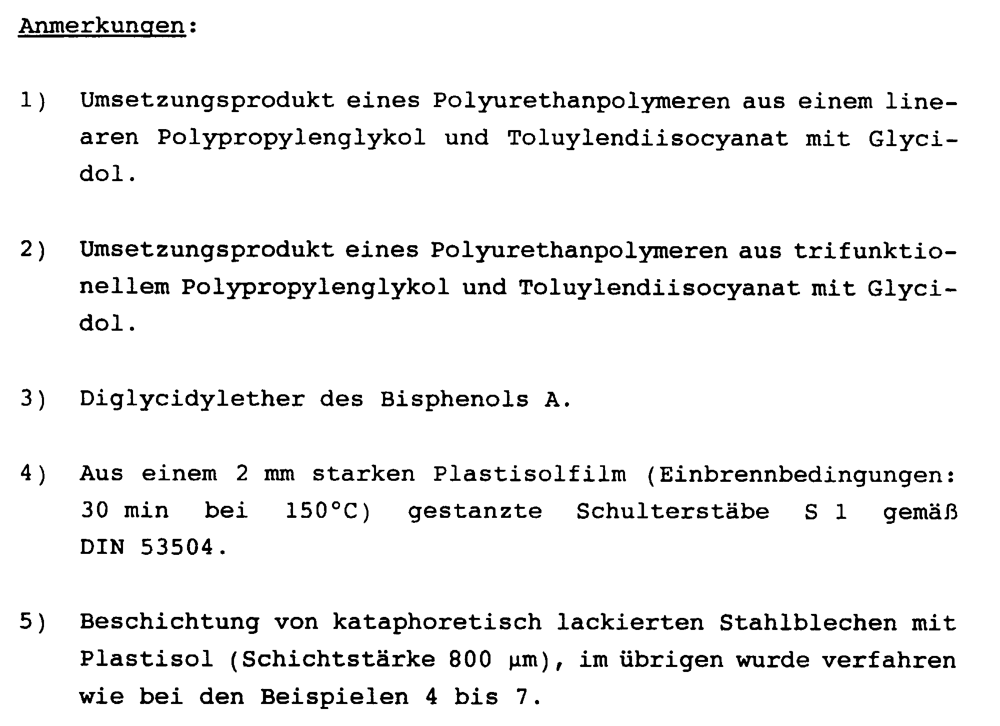

Aus den erfindungsgemäßen Beispielen 11 und 12 sieht man besonders deutlich, daß durch geschickte Auswahl der Zusätze zum Plastisol die mechanischen Eigenschaften, insbesondere die Zugfestigkeit in weiten Grenzen verändert werden können, ohne daß die Bruchdehnung oder der Abrieb signifikant verschlechtert werden.

## Patentansprüche

1. Plastisolzusammensetzung auf Basis von Styrolcopolymeren, Weichmachern und anorganischen Füllstoffen, dadurch gekennzeichnet, daß sie als Styrolcopolymere durch Emulsionspolymerisation herstellbare Copolymer-Pulver enthält, welche, bezogen auf das Copolymer, aus
a) Styrol und/oder α-Methylstyrol und/oder p-Methylstyrol und
b) 3 bis 20 Gew.-% Methacrylsäure und/oder Acrylsäure und/ oder Itakonsäure sowie
c) gegebenenfalls weiteren Comonomeren ausgewählt aus Methyl(meth)acrylat, (Meth)acrylamid und Glycidyl(meth)acrylat als Ersatz von bis zu 80 Gew.-% des Comonomeren b) und
d) gegebenenfals kautschukbildenden Comonomeren ausgewählt aus Butadien, Isopren und Piperylen als Ersatz von bis zu 45 Gew.-% des Comonomeren a) bestehen.

2. Plastisolzusammensetzung nach Anspruch 1, dadurch gekennzeichnet, daß der Anteil an Comonomer-Komponente b) im Styrolcopolymeren 5 bis 10 Gew.-%, bezogen auf das Copolymere, beträgt.

3. Plastisolzusammensetzung nach einem der Ansprüche 1 bis 2, dadurch gekennzeichnet, daß das Copolymere als Pulver mit einer durchschnittlichen Primärteilchengröße von 0,3 bis 1,5 µm und mit einer durchschnittlichen Sekundärteilchengröße von weniger als 100 µm vorliegt.

4. Plastisolzusammensetzung nach einem der Ansprüche 1 bis 3, dadurch gekennzeichnet, daß das Copolymere ein eine Kern/ Schale-Struktur aufweist, bei der die polaren Gruppen im wesentlichen außen liegen.

5. Plastisolzusammensetzung nach einem der vorhergehenden Ansprüche, dadurch gekennzeichnet, daß sie zusätzlich eine bei der Geliertemperatur mit den Carboxylgruppen des Copolymeren unter Vernetzung reagierende Verbindung enthält.

6. Plastisolzusammensetzung nach Anspruch 5, dadurch gekennzeichnet, daß sie als mit Carboxylgruppen vernetzend wirkende Verbindung langkettige Epoxyverbindungen, epoxydierte Polybutadiene oder di- oder polyhydroxyfunktionelle Polyethylen- und/oder Polypropylenglykole oder deren Copolymere oder hydroxyfunktionelle Polybutadiene enthält.

7. Plastisolzusammensetzung nach den Ansprüchen 5 oder 6, da durch gekennzeichnet, daß sie zusätzlich einen Katalysator für die Vernetzungsreaktion enthält.

8. Plastisolzusammensetzung nach Anspruch 7, dadurch gekennzeichnet, daß sie als Katalysator gegebenfalls substituierte Imidazole, tertiäre Amine, Tetramethylendiamin, Harnstoffderivate, Alkylbenzolsulfonsäuren oder Titanate enthält.

9. Plastisolzusammensetzung nach Anspruch 5, dadurch gekennzeichnet, daß das Copolymere als weiteres Comonomer Glycidyl(meth)acrylat enthält und daß das Plastisol als mit den Epoxidgruppen vernetzend wirkende Verbindungen Di- oder Polyamine, Di- oder Polycarbonsäuren oder Mercaptoverbindungen enthält.

10. Plastisolzusammensetzung nach einem der vorhergehenden Ansprüche, dadurch gekennzeichnet, daß sie zusätzlich gelöst in dem Weichmacher eine gegenüber dem Copolymeren untergeordnete Menge an Polyurethanbildnern in Form von Isocyanatpräpolymeren und (cyclo)aliphatischen Diaminen enthält, welche bei der Geliertemperatur unter Polyurethanbildung reagieren.

11. Plastisolzusammensetzung nach Anspruch 10, dadurch gekennzeichnet, daß sie Isocyanate mit blockierten Isocyanatgruppen enthält.

12. Plastisolzusammensetzung nach Anspruch 10 oder 11, dadurch gekennzeichnet, daß sie die Isocyanatpräpolymeren in einer Menge bis zu 30 Gew.-% der Gesamtformulierung und die (cyclo)aliphatischen Diamine bei niedrigmolekularen Aminen (bis zu einem Molekulargewicht von etwa 500) in einer Menge bis zu 5 Gew.-%, bei höhermolekularen Diaminen in einer Menge bis zu 30 Gew.-% der Gesamtformulierung enthält.

13. Plastisolzusammensetzung nach einem der Ansprüche 1 bis 12, dadurch gekennzeichnet, daß sie auf 100 Teile des Copolymeren bis zu 700 Teile inerte Füllstoffe enthält.

14. Verwendung einer Plastisolzusammensetzung gemäß einem der Ansprüche 1 bis 13 im Kraftfahrzeugbau als Unterbodenschutzmittel, als Klebstoff für die Haubenunterfütterung, als Masse zum Schwellerschutz oder als Punktschweißpaste.

15. Verwendung einer Plastisolzusammensetzung gemäß einem der Ansprüche 1 bis 13 in der Verpackungsmittelindustrie als Dichtungsmasse für Behälterverschlüsse oder als Nahtabdichtungsmittel oder als Bördelnahtklebstoff für Blechdosen.

## Claims

1. Plastisol composition based on styrene copolymers, plasticisers and inorganic fillers, characterised in that it contains, as the styrene copolymers, copolymer powders which may be produced by emulsion polymerisation and consist, relative to the copolymer, of
a) styrene and/or α-methylstyrene and/or p-methylstyrene and
b) 3 to 20 wt.% of methacrylic acid and/or acrylic acid and/or itaconic acid together with
c) optionally further comonomers selected from among methyl (meth)acrylate, (meth)acrylamide and glycidyl (meth)acrylate as a replacement for up to 80 wt.% of the comonomer b) and
d) optionally rubber-forming comonomers selected from among butadiene, isoprene and piperylene as a replacement for up to 45 wt.% of the comonomer a).

2. Plastisol composition according to claim 1, characterised in that the proportion of comonomer component b) in the styrene copolymer is 5 to 10 wt.%, relative to the copolymer.

3. Plastisol composition according to one of claims 1 to 2, characterised in that the copolymer is in the form of a powder having an average primary particle size of 0.3 to 1.5 µm and having an average secondary particle size of less than 100 µm.

4. Plastisol composition according to one of claims 1 to 3, characterised in that the copolymer has a core/shell structure in which the polar groups are substantially on the outside.

5. Plastisol composition according to one of the preceding claims, characterised in that it additionally contains a compound which, at the gelation temperature, reacts with the carboxyl groups of the copolymer, forming crosslinks.

6. Plastisol composition according to claim 5, characterised it contains, as the compound crosslinking with carboxyl groups, long-chain epoxy compounds, epoxidised polybutadienes or di- or polyhydroxy-functional polyethylene and/or polypropylene glycols or the copolymers thereof or hydroxy-functional polybutadienes.

7. Plastisol composition according to claims 5 or 6, characterised in that it additionally contains a catalyst for the crosslinking reaction.

8. Plastisol composition according to claim 7, characterised in that it contains, as catalyst, optionally substituted imidazoles, tertiary amines, tetramethylenediamine, urea derivatives, alkylbenzene-sulphonic acids or titanates.

9. Plastisol composition according to claim 5, characterised in that the copolymer contains, as further comonomer, glycidyl (meth)acrylate and that the plastisol contains, as the compounds crosslinking with the epoxy groups, di- or polyamines, di- or polycarboxylic acids or mercapto compounds.

10. Plastisol composition according to one of the preceding claims, characterised in that it additionally contains, dissolved in the plasticiser, a subordinate quantity relative to the copolymer of polyurethane formers in the form of isocyanate prepolymers and (cyclo)aliphatic diamines which react at the gelation temperature to form polyurethane.

11. Plastisol composition according to claim 10, characterised in that it contains isocyanates having blocked isocyanate groups.

12. Plastisol composition according to claim 10 or 11, characterised in that it contains the isocyanate prepolymers in a quantity of up to 30 wt.% of the total formulation and the (cyclo)aliphatic diamines in a quantity of up to 5 wt.%, in the case of low molecular weight amines (up to a molecular weight of approximately 500), and of up to 30 wt.% of the total formulation in the case of higher molecular weight diamines.

13. Plastisol composition according to claims 1 to 12, characterised in that it contains up to 700 parts of inert fillers per 100 parts of copolymer.

14. Use of a plastisol composition according to one of claims 1 to 13 in automotive construction as an underbody sealant, as an adhesive for the bonnet lining, as a sill protection composition or as a spot-welding paste.

15. Use of a plastisol composition according to one of claims 1 to 13 in the packaging materials industry as a sealing compound for container closures or as a seam sealant or as a flange-joint adhesive for tin cans.

## Revendications

1. Composition de plastisol à base de copolymères de styrène, de plastifiants et de charges minérales,
caractérisée en ce qu'
elle contient comme copolymères une poudre de copolymères qu'on peut préparer par polymérisation en émulsion, qui est constituée de :
a) styrène et/ou α-méthylstyrène et/ou p-méthylstyrène, et
b) 3 à 20 % en poids d'acide méthacrylique et/ou d'acide acrylique et/ou d'acide itaconique, ainsi que :
c) le cas échéant d'autres comonomères choisis parmi le (méth)acrylate de méthyle, le (méth)acrylamide et le (méth)acrylate de glycidyle en remplacement de jusqu'à 80 % en poids du comonomère b), et
d) le cas échéant des comonomères formant du caoutchouc choisis parmi le butadiène, l'isoprène et le pipérylène en remplacement de jusqu'à 45 % en poids du comonomère a).

2. Composition de plastisol selon la revendication 1,
caractérisée en ce que
la teneur en composant comonomère b) dans le copolymère de styrène représente 5 à 10 % en poids par rapport au copolymère.

3. Composition de plastisol selon l'une des revendications 1 à 2,
caractérisé en ce que
le copolymère se présente sous forme de poudre avec une taille moyenne de particules primaires de 0,3 à 1,5 µm et avec une taille moyenne de particules secondaires inférieure à 100 µm.

4. Composition de plastisol selon l'une des revendications 1 à 3,
caractérisée en ce que
le copolymère présente une structure coeur-coquille, où les groupes polaires sont situés essentiellement à l'extérieur.

5. Composition de plastisol selon l'une des revendications précédentes,
caractérisée en ce qu'
elle contient en plus un composé réagissant par réticulation à la température de gélification avec les groupes carboxyles du copolymère.

6. Composition de plastisol selon la revendication 5,
caractérisée en ce qu'
elle contient comme composé à effet réticulant avec les groupes carboxyles des composés époxy, des polybutadiènes époxydés ou des polyéthylène- et/ou des polypropylèneglycols di- ou polyfonctionnels ou leurs copolymères ou des polybutadiènes à fonction hydroxy.

7. Composition de plastisol selon les revendications 5 ou 6,
caractérisée en ce qu'
elle contient en plus un catalyseur de la réaction de réticulation.

8. Composition de plastisol selon la revendication 7,
caractérisée en ce qu'
elle contient comme catalyseur des imidazols substitués, le cas échéant des amines tertiaires, de la tétraméthylènediamine, des dérivés d'urée, des acides alkylbenzènesulfoniques ou des titanates.

9. Composition de plastisol selon la revendication 5,
caractérisée en ce que
le copolymère contient comme autre comonomère du (méth)acrylate de glycidyle et que le plastisol contient comme composés provoquant la réticulation avec les groupes époxy des di- ou polyamines, des acides di- ou polycarboxyliques ou des composés mercapto.

10. Composition de plastisol selon l'une des revendications précédentes,
caractérisée en ce qu'
elle contient en plus à l'état dissous dans le plastifiant une quantité minime par rapport au copolymère, de formateurs de polyuréthanne sous forme de prépolymères d'isocyanate et de diamines (cyclo)aliphatiques, qui réagissent à la température de gélification en formant un polyuréthanne.

11. Composition de plastisol selon la revendication 10,
caractérisée en ce qu'
elle contient des isocyanates à groupes isocyanates bloqués.

12. Composition de plastisol selon la revendication 10 ou 11,
caractérisée en ce qu'
elle contient les prépolymères d'isocyanate en une quantité pouvant atteindre 30 % en poids de la formulation globale et les diamines (cyclo)aliphatiques peuvent être représentées par des amines de bas poids moléculaire (jusqu'à un poids moléculaire d'environ 500) jusqu'à une quantité pouvant atteindre 5 % en poids, par des diamines de haut poids moléculaire jusqu'à 30 % en poids de l'ensemble de la formulation.

13. Composition de plastisol selon l'une des revendications 1 à 12,
caractérisée en ce qu'
elle contient pour 100 parties du copolymère jusqu'à 700 parties de charges inertes.

14. Utilisation d'une composition de plastisol selon l'une des revendications 1 à 13 en construction automobile comme agent de protection de fond de caisse, comme adhésif du garnissage interne de capot, comme mastic de passages de roues et comme pâtes pour points de soudure.

15. Utilisation d'une composition de plastisol selon l'une des revendications 1 à 13 dans l'industrie de l'emballage comme mastic d'étanchéité d'obturation de récipients ou comme mastic d'étanchéité de cordon de soudure ou comme adhésif de joint de sertissage de boîtes en tôle.
